# EUROPEAN PATENT SPECIFICATION

(11) **EP 3 986 596 B1**
(45) Date of publication and mention of the grant of the patent: **12.07.2023**
(21) Application number: 20760837.3
(22) Date of filing: 21.08.2020
(51) Int. Cl.: C21B 13/12, B01D 53/60, C21B 13/00, C22B 1/24, C01B 32/50, C22B 1/243, C22B 1/244, C22B 1/245, B01D 53/14, B01D 53/22, B01D 53/26, B01D 53/62

(54) **METHOD AND A DIRECT REDUCTION PLANT FOR PRODUCING DIRECT REDUCED IRON**
VERFAHREN UND EINE DIREKTE REDUZIERUNGSANLAGE ZUR HERSTELLUNG VON DIREKT REDUZIERTEM EISEN
PROCÉDÉ ET INSTALLATION DE RÉDUCTION DIRECTE POUR LA PRODUCTION DE FER À RÉDUCTION DIRECTE

(30) Priority: 23.08.2019 AT 2772019
(43) Date of publication of application: 27.04.2022
(73) Proprietor: SCHULTES, John W., 8820 Neumarkt / Stmk (AT); Karner, Wilhelm, 3041 Asperhofen (AT)
(72) Inventor: SCHULTES, John W., 8820 Neumarkt / Stmk (AT); Karner, Wilhelm, 3041 Asperhofen (AT)
(74) Representative: Patentanwälte Pinter & Weiss OG
(86) International application number: PCT/EP2020/073455
(87) International publication number: WO 2021/037700

(56) References cited:
- WO-A1-99/36581
- WO-A1-99/63119
- DE-A1- 2 904 768
- JP-A- 2015 218 351
- US-A1- 2005 092 130
- US-A1- 2012 036 960
- US-A1- 2015 275 323
- US-B2- 8 337 613

## Description

The present invention pertains to a method for producing direct reduced iron comprising the step of treating raw material comprising iron oxide containing material and carbonaceous containing material in a direct reduction unit at an elevated reaction temperature between 1000°C and 1200°C for a given time period for producing the direct reduced iron and hot off-gas, whereas the direct reduction unit is heated to the reaction temperature using electrically heating. The invention does also pertain to a corresponding direct reduction plant.

Generation of electric energy by coal fired power stations and the production of iron and steel are both industrial processes with high emission levels of carbon dioxide (CO2). It is well known that the emission of CO2 into the atmosphere presently leads to an ever-increasing content of this gas in the atmosphere which may lead to global warming.

Direct reduced iron (DRI), produced by direct reduction of iron ore, is often used in the production of iron and steel and is therefore an important feedstock in these industries.

US 4,701,214 A describes the original direct reduction process in a rotary hearth furnace, also known under the brand name of "Fastmet". US 5,730,775 A describes a further improvement of the "Fastmet" process.

US 5,685,524 A describes the use of self-reducing pellets in a rotary hearth to produce DRI for use in iron- or steelmaking. In an effort to save energy the pellets are preheated with hot off gas from other iron- or steelmaking processes.

US 5,066,325 A describes a three-stage process in which coal is treated in a first stage to drive off volatiles and to form a very low volatile char. The volatiles can be collected and utilized as a valuable oil product, such as for diesel fuel or the like. The char material is utilized as a reductant in a second stage of direct iron reduction. The hot product gases generated in the reduction process are utilized to generate electricity in a third stage.

Also, US 6,519,942 B2 describes the usage of hot off gases from a direct iron production process to generate electricity.

WO 1994/008055 A1 describes a method to use Petroleum Coke (petcoke) to create first a reducing gas which can be used to reduce iron ore. Due to its high sulfur content petcoke is often an unwanted material, but in the context of direct reduction where a de-sulfurization process must be employed anyway it can be economically to use it as reductant and/or fuel.

US 7,632,330 B2 describes a method by which iron ore can be reduced using biomass particles and resinous material. US 2013/0081516 A1 describes a direct reduction of iron ore with biomass and coal. By using an excess of biomass synthetic gas is produced which can be used to produce electricity.

In general, the off gas from the direct reduction process for producing DRI contains pollutants such as dust, oxides of sulfur (SOx), oxides of nitrogen (NOx) etc. It is state of the art and also a legal requirement to remove these pollutants from the off gas before venting it to the atmosphere. The process for removing the pollutants can be carried out in such a way that the reaction products will be in the form of a solution ("wet scrubbing ") or dry solids ("dry scrubbing").

US 7,625,527 B2, for example, describes a method to treat a hot off gas with slurry of lime in such a way that a dry reaction product is obtained. Dry scrubbing is also described in US 4,019,444 A. Dry scrubbing products are favourable because no waste liquid has to be treated further and often the by-product can be used for other applications.

Although pollutants in the off gas can be removed, e.g. with dry or wet scrubbing, it nevertheless still comprises significant amounts of CO2 that reach the atmosphere when the off gas is vented into the atmosphere.

Carbon capture and storage (CCS) technology has been widely described in recent years for recovering of CO2 gases. This technology is seen as a potential solution to diminish or even reduce the ever-increasing content of CO2 in the atmosphere which may lead to a global warming of the atmosphere.

CCS may be used advantageously in industrial processes where off gases with relatively high carbon dioxide concentrations are generated. For off gases with low CO2 content the technology cannot be used economically due to the high costs of treating high off gas volumes. The higher the CO2 concentration in the off gas, the better the efficiency of a CCS process becomes.

US 2005/092130 A1 discloses a method for producing direct reduced iron by means of a fluidized bed reactor. The exhaust gas is used in a two-step system to dry the green pellets for the reactor. A fluidized bed reactor using carrier gases like N₂ or CO is disclosed. A gas flux is necessary in these reactors to keep particles floating inside the reactor, which reduces the CO₂ concentration in the off-gas and therefore no Carbon capture and storage can effectively be used.

US 2015/275323 discloses a two-step system including a preheater and a main furnace for reduction, in which the pig iron is finally reduced and molten. The waste heat of the hearth is used to operate a turbine for reducing the energy need of the system. The offgas of the final reactor still contains high concentrations of CO and H₂, so that it cannot be directly used for an CCS system. In a conversion system, which is described, water vapor and CO₂ are left in the off-gas.

It is usually a prerequisite that the off gas entering the CCS process is purified from all other pollutants such as dust, SOx, NOx etc. This is usually achieved by a gas cleaning system using wet scrubbing or dry scrubbing with basic absorbents such as lime, magnesia, soda ash and similar compounds.

One of the established technologies of CCS is amine absorption. In this case CO2 in off gas is absorbed into a liquid solution of alkanolamines and thereby removed from the off gas. Absorbents require a regeneration step (desorption) where the CO2 is removed in order for the sorbent or solution to be reused. The removed CO2 may be used further or stored. US 4,112,052 A describes such a method in more detail.

The first step of CO2 absorption takes place at temperatures of typically around 40°C to 60°C, the second step of desorption takes place at a higher temperatures, typically about 80°C to 150°C. This second step of the process is the main energy consumer since a relatively large volume of CO2-rich absorbent must be heated from the lower to the higher temperature.

The recovered CO2 can be stored or used in other industrial processes, for example for enhanced oil recovery. EP 1,258,595 A2 describes a method to inject a gas mixture of preferably more than 70% CO2 into a wellbore to improve the recovery of oil from the well or underground formation.

An object of the present invention is the efficient and economical production of DRI with low CO2 emissions. This is achieved according to the features of the independent claims.

By providing the heat for the direct reduction process primarily electrically, and not by a combustion process, essentially no nitrogen is introduced into the off-gas of the direct reduction process and, thus, the CO2 concentration in the off-gas can be increased (as compared to conventional DRI processes with combustion) to 80% to 95% carbon dioxide. This allows an efficient and economical removal of CO2 from the off-gas in a CCS, after purifying the off-gas from polluting constituents others than carbon dioxide.

When the heat of the hot off-gas is used for producing steam and using at least part of the produced steam to drive a steam turbine and an electrical generator for producing electrical energy, then at least part of this electrical energy may advantageously be used for electrically heating the direct reduction unit or may be used in other industrial processes or plants. This makes the DRI process even more economical.

The very high concentrations of CO2 in the off-gas allows the efficient CO2 recovery using a carbon capture and storage process. Efficiency may even be increased when the residual heat of the steam downstream of the steam turbine is used as heat source for the carbon capture and storage process. In that way, the most energy consuming step in the CCS process, namely the desorption step, may be supported by this residual heat and less additional heat must be provided.

When the off-gas contains water or water vapour, especially when steam or an oxy-fuel burner is used for purging off-gas from the direct reduction unit, the carbon dioxide final gas can simply be provided by cooling the purified off-gas for condensing water comprised in the off-gas and by removing the condensed water.

The present invention is explained in the following in more detail referring to Figures 1 to 4, which show exemplary, schematic and non-limiting advantageous embodiments of the invention. In the drawings
Fig.1 shows a direct reduction unit with electrical heating,
Fig.2 shows a direct reduction process in combination with the generation of electrical energy and CO2 recovery from the off-gas,
Fig.3 shows using steam for purging off-gas from a direct reduction unit and
Fig.4 shows using oxy-fuel burners for purging off-gas from a direct reduction unit.

It has been mentioned above that the removal of carbon dioxide from an industrial off gas stream is more economic if the CO2 content in the off gas is as high as possible.

Most of the CO2 worldwide is generated by combustion processes where carbonaceous material, like coal or hydrocarbons like oil or gas, is burned with air. Thus, it is inevitable that the biggest portion of the off gas is nitrogen from the air, according to the following formula,

C + O2 + 4 N2 = CO2 + 4 N2

Therefore, the theoretical highest content of CO2 in such combustion processes is 1/5 (20%). In practice however due to combustion with excess air it is considerably lower.

The CO2 content could be increased with chemical looping combustion (CLC) which increases the efficiency of combustion processes.

In a direct reduction process for producing DRI an iron ore is heated in a hearth or furnace at a temperature high enough to burn off its carbon and oxygen content (a process called reduction) but below iron's melting point, i.e. not higher than 1200°C. The objective of the process is to drive off the oxygen contained in the various forms of iron ore, in order to convert the ore to metallic iron, without melting it. The required heat for this process is provided by burning carbonaceous material, like coal or hydrocarbons like oil or gas, in a furnace with air. In the direct reduction process about 30% of the carbonaceous material is consumed for supplying the necessary heat of reaction and is consumed in a combustion reaction using air as an oxidant. The rest is used for the reduction of the iron ore. Combined, the reactions (reduction and combustion) in the direct reduction process with coal as carbonaceous material could be written as

1,4 Fe2O3 + 2,4 C + 0,3 O2 + 1,2 N2 = 2,8 Fe + 2,4 CO2 + 1,2 N2

resulting in CO2 concentration in the off gas of 2,4/3,6 (67%).

This CO2 concentration in the off-gas is more than 3 times higher than in a normal combustion process and, therefore, it is suited for combination with a CO2 removal process, like a CCS process, e.g. removal of CO2 by an amine washing process.

By using at least partly biomass in the direct reduction process as a reductant for the iron ore and/or as a source to provide the necessary reaction energy the whole process can even become "carbon negative", i.e. the carbon dioxide content in the atmosphere can actually be reduced from present levels.

It is a goal of the invention to increase the CO2 concentration in the off gas of the direct reduction process, in order to make the subsequent CO2 removal process even more economical.

In direct reduction of iron oxide, the oxygen which is reacting with carbon is originating from the iron oxide and thus no nitrogen is involved, according to the formula

2Fe2O3 +3 C = 4Fe + 3 CO2.

In reality, this is a multi-stage process with an intermediate formation of CO gas but the overall formula can be used for this theoretical calculation. Theoretically, the CO2 content in the off gas could be 100%, again in practical installations the CO2 content is lower.

The required energy (heat) for driving this process is now provided by electrical heating and not by combustion of carbonaceous material. In that way no carbonaceous material has to be burned with air to drive the reaction and thus no nitrogen is contained in the off gas. By this method an off gas is generated with a carbon dioxide content of more than 80%, and up to 95%, typically up to 90%, whereas the remainder being mainly pollutants like CO, SOx, NOx and possibly water (H2O).

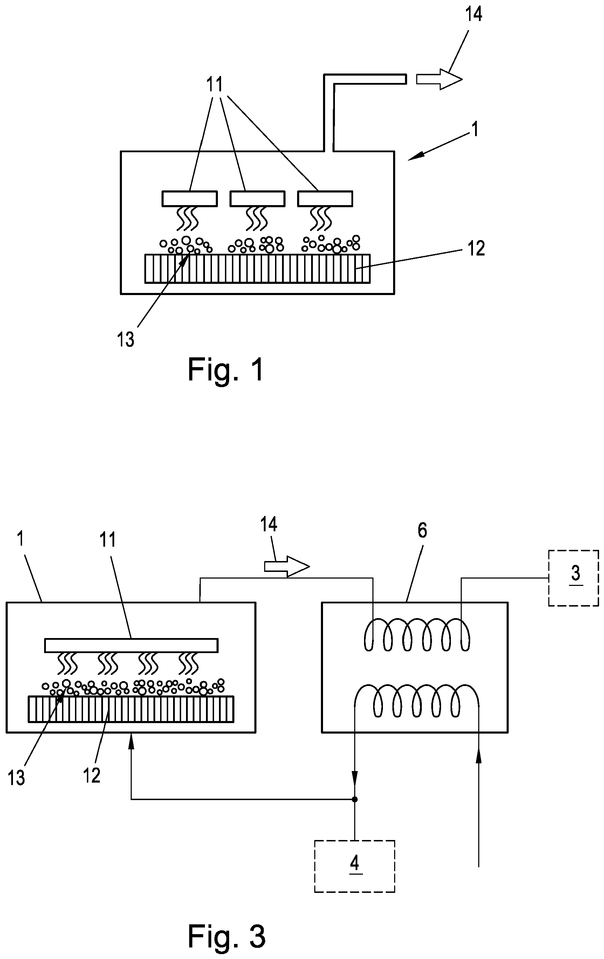

Electrical heating can be realised by arranging electrically heated heating elements 11 in the direct reduction unit 1, like a rotary hearth, in the vicinity of the reduction bed 12 onto which the materials 13 of the direct reduction process (iron ore, carbonaceous material like coal or petcoke, self reducing pellets (as explained below)) are placed, as shown in Fig.1. The heating elements 11 may be arranged above and/or surrounding the reduction bed 12, for example. The direct reduction unit 1 is heated to a temperature of typically 1000°C to 1200°C by the heating elements 11 to drive the direct reduction process. The direct reduction process takes preferably place at temperatures between 1000°C and 1200°C and typically for 15 to 60 minutes.

The CO2 (and polluting constituents) containing off gas produced in the direct reduction process is continuously removed from the direct reduction unit 1, for example with removal by suction or by continuously purging the direct reduction unit 1 (as explained in more detail below).

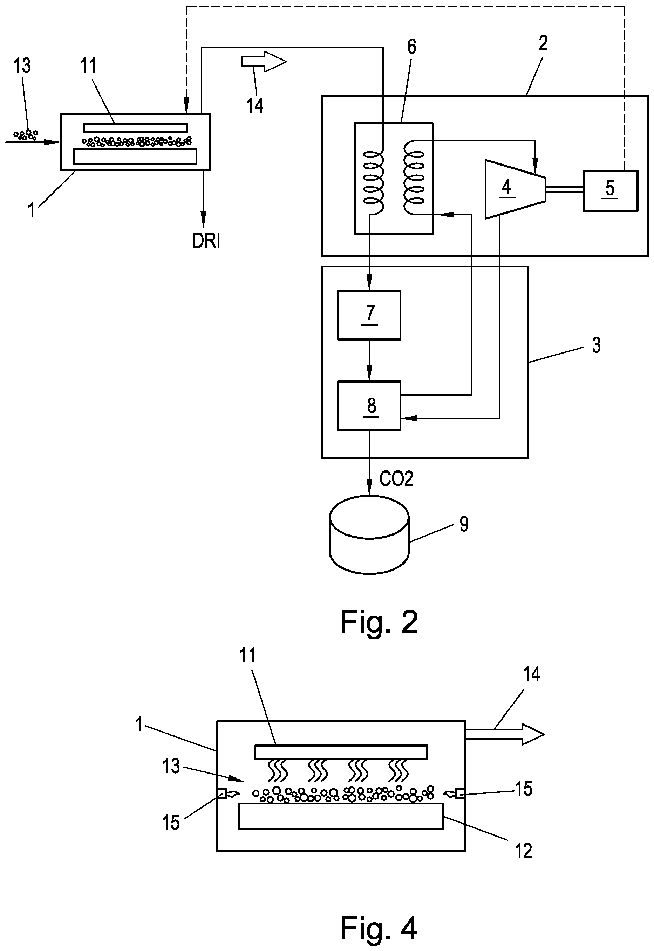

The hot off gas from the direct reduction unit 1 may also be used as energy source for an electricity production process, es explained with reference to Fig.2. In the embodiment of Fig.2, the hot off gas is used for steam production that is used in a steam turbine 4, that drives an electric generator 5. The generated electric energy may be used in the direct reduction unit 1 for electrically heating, as indicated in Fig.2 with dashed line. In that way at least part of the electrical energy for electrically heating the direct reduction unit 1 may be provided.

This allows the combination of a direct reduction process for producing DRI and an electricity production process that uses hot off gas from the direct reduction process, which improves the efficiency of the direct reduction process.

The direct reduction process may also, and independently from combination with electricity production, be combined with a CO2 obtaining process for obtaining CO2 from the off-gas.

In an advantageous embodiment, the direct reduction process is combined with an electricity generation process and with a CO2 obtaining process, as is described in the following with reference to Fig.1 in more detail.

In a well-known direct reduction unit 1, e.g. a rotary hearth furnace, tube furnace or similar device, a direct reduction process takes place for producing DRI. The direct reduction unit 1 is fed with raw material 13 comprising iron oxide containing material, like iron ore, and carbonaceous material, like coal, petcoke, wood, biomass, oil etc. The carbonaceous material serves as reductant in the direct reduction process. The direct reduction unit 1 is heated electrically by the heating element 11 for driving the chemical reaction for producing DRI. The electrical energy for the electrical heating element 11 may be provided by an electricity generation process using the hot off gas as energy source.

In a possible embodiment self-reducing pellets are produced as raw material 13 for the direct reduction process. To this end iron oxide, like iron ore, and the carbonaceous material, like petcoke, coal, wood pellets, biomass, or mixtures thereof, are ground to a submicron particle size, whereas at least 90% of the ground particles are submicron. The ground iron oxide and carbonaceous particles are thoroughly mixed in a dry mixer. A suspension of a binder and a solvent, like water, is mixed with the mix of the ground iron oxide and ground carbonaceous material to form a slurry. The slurry is then pelletized, e.g. in a drum pelletizer, by forming pellets and drying the pellets. The size of the formed pellets can be between 10 and 20mm (diameter). The such formed pellets are dried in a furnace to evaporate the solvent of the binder suspension. At which temperatures and for how long the pellets are dried may depend on the binder. Pellets can also be formed by extruding the slurry and cutting disks of the extrudate and then drying the disks. The heat for drying the pellets may be provides by the hot off gas from the direct reduction unit 1.

Such pellets are self-reducing in that they already comprise the required reductant (carbonaceous material) for the direct reduction process.

In an example, iron ore and petcoke (e.g. from an oil refining process) are ground to at least 90% submicron particles. The composition of the used iron ore was Fe total 64,1% as 91,6% Fe2O3, SiO2 5,2%, Al2O3 1,6%, MnO 1,1 %, MgO 0,4%. The composition of the petcoke was carbon 88,0%, hydrogen 3,6%, sulfur 5,1%, ash 0,8%. A binder suspension of 10% bentonite, 20% dextrin and 70% water was prepared. The ground iron ore, ground petcoke and the binder suspension was mixed in the ratio 60:30:10. Pellets of diameter between 10 and 20mm of the such produced slurry were formed and dried in a furnace at 110°C for 3 hours.

The dried pellets were introduced as raw material 13 for the direct reduction process into an electrically heated tube furnace and the temperature of the furnace was set to 1100°C by electrically heating the direct reduction unit 1. After 20 minutes a metallized solid product (DRI) containing 87% elemental iron (Fe) was obtained.

The hot off-gas 14 of the direct reduction process in the direct reduction unit 1 is typically at temperatures of 1150 to 1250°C, depending on the temperature in the direct reduction unit 1, and is led to an electricity production unit 2 and to a purification unit 3.

The electricity production unit 2 comprises a steam turbine 4 that drives a generator 5 for generating electric energy. The generated electric energy may be provided to an electric grid or could also be used for electrically heating the direct reduction unit 1 or supplying electrical energy to another industrial plant, like a steel production plant. The steam for the steam turbine 4 is produced in a heat exchanger 6. The heat exchanger can be of any suitable type, like a parallel-flow, counter-flow or cross-flow heat exchanger. In the heat exchanger 6 the heat in the hot off gas of the direct reduction unit 1 is, directly or indirectly, transferred to the working media of the steam turbine, e.g. water, to vaporize the working media for producing the steam.

The hot off-gas 14 is cooled down in the heat exchanger 6 to temperatures of about 100°C to 150°C, typically around 120°C. The such cooled off-gas is led to an off-gas cleaning device 7 that implements cleaning process, for example a wet scrubbing or dry scrubbing cleaning process as explained above, for removing pollutants in the off-gas and for purifying the off-gas. Gaseous or solid pollutants in the off-gas, others than CO2, such as dust, SOx, NOx etc. and other possible trace impurities, are removed from the off-gas in the off-gas cleaning device 7.

Downstream of the off-gas cleaning device 7, the off-gas comprises high concentrations of CO2, because of the implemented direct reduction process with electrical heating, as explained above. The high concentrations of CO2 in the off-gas, typically 80 to 90%, allows efficiently obtaining the CO2 in a CO2 obtaining unit 8. The CO2 obtaining unit 8 implements a carbon capture and storage (CCS) process (like explained above) or by membrane separation, for example. In the CO2 obtaining unit 8 the CO2 final gas is obtained from the off-gas.

The residual heat in the steam downstream or in the low-pressure section of the steam turbine 4 may advantageously be used in the CO2 obtaining unit 8 as indicated in Fig.1. For example, the residual heat of the steam may be used in a CCS process for heating or supporting heating of the CO2 enriched absorbent from the lower temperature after the absorption step to the required higher temperature for regeneration of the absorbent and desorption of CO2 from the absorbent.

To this end the output steam of the steam turbine 4 could be led to the CO2 obtaining unit 8 where the heat of the steam could be directly used for the desorption step. The heat in the steam downstream of the steam turbine 4 could, however, also be transferred to another working media, for example in a further heat exchanger (not shown in Fig.1). Then the heat of this working media could be used in the CO2 obtaining unit 8.

The CO2 final gas obtained in the CO2 obtaining unit 8 may be stored in a CO2 storage 9, e.g. an underground storage, or could be used in other industrial processes and could also be liquified before further usage.

Because of the achieved very high concentrations of CO2 in the off-gas, it is even possible to simply directly use the purified off-gas from the off-gas cleaning device 7 as the CO2 final gas, e.g. in other industrial processes or for storage in a storage unit 9. In this case, the CO2 obtaining unit 8 could be omitted.

When the off-gas comprises water, it is also possible to cool the purified off-gas from the off-gas cleaning device 7, e.g. by indirect cooling, whereby the contained water in the off-gas is condensed and can be removed. The resulting CO2 final gas with a CO2 content of >98% can then directly be used, e.g. can be compressed and/or liquified for further transport or usage or can be stored in a storage unit 9. Also, in this case, a CO2 obtaining unit 8 could be omitted or could be replaced by a condensing unit for cooling the off-gas.

The CO2 final gas has a CO2 content of at least 95%, up to 100%.

By using petcoke as carbonaceous material in the direct reduction process, a cycle between oil production and refining and the production of iron or steel could be established. The generated CO2 could be used for oil production. Petcoke, a by-product of the oil refining process, could be used for producing the self-reducing pellets for the direct reduction process. The produced DRI is used for steel or iron production. The generated electric energy could be used in the direct reduction unit 1, but also in oil production or refining plants or in a steel production plant.

In a further advantageous embodiment, the hot steam upstream of the steam turbine 4 may also be used in the direct reduction unit 1, as is explained with reference to Fig.3.

Part of the hot (superheated) steam produced in the heat exchanger 6 is branched off and led to the direct reduction unit 1. The main part of the hot steam may be used in a steam turbine 4 as explained above. The branched off steam is used to generated a directional flow in the direct reduction unit 1 for purging the off-gas. To this end, the steam is advantageously fed to the direct reduction unit 1 from below and flows through openings in the reduction bed 12 (as indicated in Fig.3), that may be designed like a grating. The steam therefore also flows through the material 13 on the reduction bed 12.

The steam serves three purposes. Firstly, it supports the reduction process as the water steam reacts with the carbon in the material 13 according to the formula

H2O + C = H2 + CO.

Both, H2 and CO, will again react with the iron oxide, e.g. Fe2O3, in the material 13 leading to reduced iron and the reaction products H2O and CO2. Secondly, the heat of the steam supports heating of the direct reduction unit 1 to the reduction temperature. Therefore, less electrical heating is required. And last but not least, the directional flow of the steam in the direct reduction unit 1, may be used for purging the direct reduction unit 1 for removing the hot off-gas from the direct reduction unit 1.

For producing a directional flow in the direct reduction unit 1 for purging the CO2, also oxy-fuel burners 15 may be used in the direct reduction unit 1, as shown in Fig.4. An oxy-fuel burner 15 burns fuel, e.g. gas like methane (CH4), using pure oxygen, e.g. according to the formula

CH4 + 2O2 = CO2 + 2H2O.

The gaseous combustion products are used for producing the directional flow for purging the direct reduction unit 1. The H2O as reaction product of the oxy-fuel combustion may also support the reduction process as explained above. Furthermore, the heat generated by the oxy-fuel combustion also supports heating the direct reduction unit 1 to the required reduction temperatures. The primary heat source for the direct reduction process is, however, still the electrical heating with the heating element 11. Typically, only 10% to 30% of the required heat for heating the direct reduction unit 1 is provided by the oxy-fuel burner 15.

Using steam and oxy-fuel burners 15 in the direct reduction unit 1 may also be combined.

## Claims

1. Method for producing direct reduced iron comprising the steps of
- treating raw material (13) comprising iron oxide containing material and carbonaceous containing material in a direct reduction unit (1) at an elevated reaction temperature between 1000°C and 1200°C for a given time period for producing the direct reduced iron and hot off-gas (14), whereas the direct reduction unit (1) is heated to the reaction temperature using electrically heating, so that the hot off-gas (14) comprises 80% to 95% carbon dioxide,
- purifying the off-gas from polluting constituents others than carbon dioxide and
- obtaining carbon dioxide final gas from the purified off-gas in a carbon capture and storage process.

2. Method according to claim 1, further comprising the step of using the heat of the hot off-gas (14) for producing steam and using at least part of the produced steam to drive a steam turbine (4) and an electrical generator (5) for producing electrical energy.

3. Method according to claim 1 and 2, further comprising the step of using the residual heat of the steam downstream or in the low-pressure section of the steam turbine (4) as heat source for the carbon capture and storage process.

4. Method according to claim 1 or 2, further comprising the step of obtaining carbon dioxide final gas from the purified off-gas by cooling the purified off-gas for condensing water comprised in the off-gas and by removing the condensed water.

5. Method according to one of claims 2 to 4, further comprising the step of purging the off-gas from the direct reduction unit (1) with part of the produced steam.

6. Method according to one of claims 1 to 5, further comprising the step of using an oxy-fuel burner (15) in the direct reduction unit (1) for purging the off-gas from direct reduction unit (1) with the produced combustion products.

7. Method according to one of claims 2 to 6, further comprising the step of using at least part of the produced electrical energy for electrically heating the direct reduction unit (1).

8. Direct reduction plant for producing direct reduced iron with a direct reduction unit (1) in which raw material (13) comprising iron oxide containing material and carbonaceous material is treated at an elevated reaction temperature between 1000°C and 1200°C using an electrical heating element (11), which is provided in the direct reduction unit (1) for heating the direct reduction unit (1) to the reaction temperature for a given time period for producing the direct reduced iron and hot off-gas (14), **characterized in that** a purification unit (3) is provided, that comprises an off-gas cleaning device (7) for purifying the hot off-gas (14) comprising 80% to 95% carbon dioxide from polluting constituents others than carbon dioxide, whereas a carbon dioxide obtaining unit (8) is provided in the purification unit (3) that implements a carbon capture and storage process for obtaining the carbon dioxide final gas from the purified off-gas.

9. Direct reduction plant according to claim 8, **characterized in that** an electricity production unit (2) is provided, that comprises a heat exchanger (6) for producing steam with the heat of the hot off-gas and a steam turbine (4) and electrical generator (5) driven by the produced steam.

10. Direct reduction plant according to claim 8 and 9, **characterized in that** the residual heat of the steam downstream or in the low-pressure section of the steam turbine (4) is used as heat source for the carbon capture and storage process.

11. Direct reduction plant according to claim 8 or 9, **characterized in that** a condensing unit is provided in the purification unit (3) that cools the off-gas for condensing water in the off-gas and that removes the condensed water from the off-gas for obtaining the carbon dioxide final gas.

12. Direct reduction plant according to one of claims 9 to 11, **characterized in that** part of the produced steam is fed to the direct reduction unit (1) for purging the off-gas from the direct reduction unit (1).

13. Direct reduction plant according to one of claims 8 to 12, **characterized in that** an oxy-fuel burner (15) for burning fuel with pure oxygen is arranged in the direct reduction unit (1) for producing combustion products that are used for purging the off-gas from the direct reduction unit (1).

14. Direct reduction plant according to one of claims 9 to 13, **characterized in that** at least part of the produced electrical energy is used by the electrical heating element (11) for electrically heating the direct reduction unit (1).

## Patentansprüche

1. Verfahren zum Herstellen von direktreduziertem Eisen, umfassend die Schritte
- Behandeln von Rohmaterial (13), umfassend eisenoxidhaltiges Material und kohlenstoffhaltiges Material, in einer Direktreduktionseinheit (1) bei einer erhöhten Reaktionstemperatur zwischen 1000 °C und 1200 °C für einen gegebenen Zeitraum zum Herstellen des direktreduzierten Eisens und heißen Abgases (14), wobei die Direktreduktionseinheit (1) unter Verwendung von elektrischem Erwärmen auf die Reaktionstemperatur erwärmt wird, sodass das heiße Abgas (14) 80 % bis 95 % Kohlenstoffdioxid umfasst,
- Reinigen des Abgases von verschmutzenden Bestandteilen abgesehen von Kohlenstoffdioxid und
- Erhalten von Kohlenstoffdioxidendgas aus dem gereinigten Abgas in einem Kohlenstofferfassungs- und -speicherprozess.

2. Verfahren nach Anspruch 1, ferner umfassend den Schritt eines Verwendens der Wärme des heißen Abgases (14) zum Herstellen von Dampf und Verwenden mindestens eines Teils des hergestellten Dampfes, um eine Dampfturbine (4) und einen elektrischen Generator (5) zum Herstellen elektrischer Energie anzutreiben.

3. Verfahren nach Anspruch 1 und 2, ferner umfassend den Schritt des Verwendens der Restwärme des Dampfes stromabwärts oder in dem Niederdruckabschnitt der Dampfturbine (4) als Wärmequelle für den Kohlenstofferfassungs- und -speicherprozess.

4. Verfahren nach Anspruch 1 oder 2, ferner umfassend den Schritt des Erhaltens von Kohlenstoffdioxidendgas aus dem gereinigten Abgas durch ein Kühlen des gereinigten Abgases zum Kondensieren von Wasser, das in dem Abgas enthalten ist, und durch ein Entfernen des kondensierten Wassers.

5. Verfahren nach einem der Ansprüche 2 bis 4, ferner umfassend den Schritt eines Spülens des Abgases aus der Direktreduktionseinheit (1) mit einem Teil des hergestellten Dampfes.

6. Verfahren nach einem der Ansprüche 1 bis 5, ferner umfassend den Schritt des Verwendens eines Oxyfuel-Brenners (15) in der Direktreduktionseinheit (1) zum Spülen des Abgases aus der Direktreduktionseinheit (1) mit den hergestellten Verbrennungsprodukten.

7. Verfahren nach einem der Ansprüche 2 bis 6, ferner umfassend den Schritt des Verwendens mindestens eines Teils der hergestellten elektrischen Energie zum elektrischen Erwärmen der Direktreduktionseinheit (1).

8. Direktreduktionsanlage zum Herstellen von direktreduziertem Eisen mit einer Direktreduktionseinheit (1), in der Rohmaterial (13), umfassend eisenoxidhaltiges Material und kohlenstoffhaltiges Material, bei einer erhöhten Reaktionstemperatur zwischen 1000 °C und 1200 °C unter Verwendung eines elektrischen Erwärmungselements (11), das in der Direktreduktionseinheit (1) zum Erwärmen der Direktreduktionseinheit (1) für einen gegebenen Zeitraum zum Herstellen des direktreduzierten Eisens und des heißen Abgases (14) vorgesehen ist, behandelt wird, **dadurch gekennzeichnet, dass** eine Reinigungseinheit (3) vorgesehen ist, die eine Abgassäuberungsvorrichtung (7) zum Reinigen des heißen Abgases (14), umfassend 80 % bis 95 % Kohlenstoffdioxid, von verschmutzenden Bestandteilen abgesehen von Kohlenstoffdioxid, umfasst, wobei eine Kohlenstoffdioxiderhaltungseinheit (8) in der Reinigungseinheit (3) vorgesehen ist, die einen Kohlenstofferfassungs- und -speicherprozess zum Erhalten des Kohlenstoffdioxidendgases aus dem gereinigten Abgas implementiert.

9. Direktreduktionsanlage nach Anspruch 8, **dadurch gekennzeichnet, dass** eine Elektrizitätsherstellungseinheit (2) vorgesehen ist, die einen Wärmetauscher (6) zum Herstellen von Dampf mit der Wärme des heißen Abgases und eine durch den hergestellten Dampf angetriebene Dampfturbine (4) und einen elektrischen Generator (5) umfasst.

10. Direktreduktionsanlage nach Anspruch 8 und 9, **dadurch gekennzeichnet, dass** die Restwärme des Dampfs stromabwärts oder in dem Niederdruckabschnitt der Dampfturbine (4) als Wärmequelle für den Kohlenstofferfassungs- und -speicherprozess verwendet wird.

11. Direktreduktionsanlage nach Anspruch 8 oder 9, **dadurch gekennzeichnet, dass** eine Kondensationseinheit in der Reinigungseinheit (3) bereitgestellt ist, die das Abgas zum Kondensieren von Wasser in dem Abgas kühlt und das kondensierte Wasser aus dem Abgas zum Erhalten des Kohlenstoffdioxidendgases entfernt.

12. Direktreduktionsanlage nach einem der Ansprüche 9 bis 11, **dadurch gekennzeichnet, dass** ein Teil des hergestellten Dampfes der Direktreduktionseinheit (1) zugeführt wird, zum Spülen des Abgases aus der Direktreduktionseinheit (1).

13. Direktreduktionsanlage nach einem der Ansprüche 8 bis 12, **dadurch gekennzeichnet, dass** ein Oxyfuel-Brenner (15) zum Verbrennen von Kraftstoff mit reinem Sauerstoff in der Direktreduktionseinheit (1) zum Herstellen von Verbrennungsprodukten angeordnet ist, die zum Spülen des Abgases aus der Direktreduktionseinheit (1) verwendet werden.

14. Direktreduktionsanlage nach einem der Ansprüche 9 bis 13, **dadurch gekennzeichnet, dass** mindestens ein Teil der hergestellten elektrischen Energie durch das elektrische Erwärmungselement (11) zum elektrischen Erwärmen der Direktreduktionseinheit (1) verwendet wird.

## Revendications

1. Procédé pour la production de fer de réduction directe comprenant les étapes consistant à
- traiter une matière première (13) comprenant un matériau contenant de l'oxyde de fer et un matériau contenant des substances carbonées dans une unité de réduction directe (1) à une température de réaction élevée comprise entre 1000 °C et 1200 °C pour une période de temps déterminée pour la production de fer de réduction directe et d'effluents de gaz chauds (14), l'unité de réduction directe (1) étant chauffée à la température de réaction à l'aide d'un chauffage électrique, de sorte que les effluents de gaz chauds (14) comprennent de 80 % à 95 % de dioxyde de carbone,
- purifier les effluents de gaz de constituants polluants autres que le dioxyde de carbone et
- obtenir du gaz final de dioxyde de carbone à partir des effluents de gaz purifiés dans un processus de captage et de stockage de carbone.

2. Procédé selon la revendication 1, comprenant en outre l'étape consistant à utiliser la chaleur des effluents de gaz chauds (14) pour produire de la vapeur et à utiliser au moins une partie de la vapeur produite pour entraîner une turbine à vapeur (4) et un générateur électrique (5) pour produire de l'énergie électrique.

3. Procédé selon la revendication 1 et 2, comprenant en outre l'étape consistant à utiliser la chaleur résiduelle de la vapeur en aval ou dans la section de basse pression de la turbine à vapeur (4) comme source de chaleur pour le processus de captage et de stockage de carbone.

4. Procédé selon la revendication 1 ou 2, comprenant en outre l'étape consistant à obtenir le gaz final de dioxyde de carbone à partir des effluents de gaz purifiés par le refroidissement des effluents de gaz purifiés pour condenser l'eau comprise dans les effluents de gaz et par l'élimination de l'eau condensée.

5. Procédé selon l'une quelconque des revendications 2 à 4, comprenant en outre l'étape consistant à évacuer les effluents de gaz de l'unité de réduction directe (1) avec une partie de la vapeur produite.

6. Procédé selon l'une quelconque des revendications 1 à 5, comprenant en outre l'étape consistant à utiliser un brûleur d'oxy-combustible (15) dans l'unité de réduction directe (1) pour évacuer les effluents de gaz de l'unité de réduction directe (1) avec les produits de combustion produits.

7. Procédé selon l'une quelconque des revendications 2 à 6, comprenant en outre l'étape consistant à utiliser au moins une partie de l'énergie électrique produite pour chauffer électriquement l'unité de réduction directe (1).

8. Installation de réduction directe pour la production de fer de réduction directe avec une unité de réduction directe (1) dans laquelle de la matière première (13) comprenant un matériau contenant de l'oxyde de fer et un matériau contenant des substances carbonées est traitée à une température de réaction élevée comprise entre 1000 °C et 1200 °C à l'aide d'un élément chauffant électrique (11), lequel est prévu dans l'unité de réduction directe (1) pour chauffer l'unité de réduction directe (1) à la température de réaction pendant une période de temps définie pour produire le fer de réduction directe et des effluents de gaz chauds (14), **caractérisée en ce qu'**une unité de purification (3) est prévue, laquelle comprend un dispositif de nettoyage d'effluents de gaz (7) pour purifier les effluents de gaz chauds (14) comprenant 80 % à 95 % de dioxyde de carbone provenant de constituants polluants autres que le dioxyde de carbone, moyennant quoi une unité d'obtention de dioxyde de carbone (8) est prévue dans l'unité de purification (3) qui met en oeuvre un processus de captage et de stockage de carbone pour l'obtention du gaz final de dioxyde de carbone à partir des effluents de gaz purifiés.

9. Installation de réduction directe selon la revendication 8, **caractérisée en ce qu'**une unité de production d'électricité (2) est prévue, laquelle comprend un échangeur de chaleur (6) pour la production de vapeur avec la chaleur des effluents de gaz chauds, ainsi qu'une turbine à vapeur (4) et un générateur électrique (5) entraînés par la vapeur produite.

10. Installation de réduction directe selon la revendication 8 et 9, **caractérisée en ce que** la vapeur résiduelle en aval ou dans la section de basse pression de la turbine à vapeur (4) est utilisée comme source de chaleur pour le processus de captage et de stockage de carbone.

11. Installation de réduction directe selon la revendication 8 ou 9, **caractérisée en ce qu'**une unité de condensation est prévue dans l'unité de purification (3) qui refroidit les effluents de gaz pour condenser l'eau dans les effluents de gaz et qui élimine l'eau condensée des effluents de gaz pour l'obtention de gaz final de dioxyde de carbone.

12. Installation de réduction directe selon l'une quelconque des revendications 9 à 11, **caractérisée en ce qu'**une partie de la vapeur produite est alimentée à l'unité de réduction directe (1) pour l'évacuation des effluents de gaz de l'unité de réduction directe (1).

13. Installation de réduction directe selon l'une quelconque des revendications 8 à 12, **caractérisée en ce qu'**un brûleur d'oxy-combustible (15) pour brûler du combustible avec de l'oxygène pur est agencé dans l'unité de réduction directe (1) pour la production de produits de combustion qui sont utilisés pour évacuer les effluents de gaz de l'unité de réduction directe (1).

14. Installation de réduction directe selon l'une quelconque des revendications 9 à 13, **caractérisée en ce que** au moins une partie de l'énergie électrique produite est utilisée par l'élément chauffant électrique (11) pour le chauffage électrique de l'unité de réduction directe (1).
